# FASCICULE DE BREVET EUROPEEN

(11) **EP 1 469 644 B1**
(45) Date de publication et mention de la délivrance du brevet: **08.02.2006**
(21) Numéro de dépôt: 04364028.3
(22) Date de dépôt: 06.04.2004
(51) Int. Cl.: H04L 12/58

(54) **Procédé et dispositif pour faire migrer une messagerie vers une autre**
Verfahren und Vorrichtunfg zur Migration zwischen elektronischen Postssystemen
Method and apparatus for e-mail migration

(30) Priorité: 18.04.2003 FR 0304852
(43) Date de publication de la demande: 20.10.2004
(73) Titulaire: FRANCE TELECOM, 75015 Paris (FR)
(72) Inventeur: Soulet, Serge, 35200 Rennes (FR)
(74) Mandataire: Joly, Jean-Jacques

(56) Documents cités:
- US-B1- 6 298 375
- BOSTICK J ; FRITZ J ; SOMMERS K ; HESLER J: "Email migration: strategies and outcomes" PROCEEDINGS. ACM SIGUCCS 1997 USER SERVICES CONFERENCE XXV, 1997, pages 29-34, XP002265679 New York, USA

## Description

L'invention concerne un procédé pour faire migrer un système de messagerie électronique vers un autre, ainsi qu'un dispositif pour sa mise en oeuvre.

Un domaine d'application de l'invention concerne le déploiement, y compris international, des systèmes de messagerie des grandes entités, comme les grandes entreprises.

Actuellement, il existe de nombreux systèmes de messagerie, comme Exchange®, Notes® (marques déposées) pour ne citer que les plus connus.

Si un même système de messagerie permet de gérer un grand nombre de boîtes aux lettres de messagerie électronique, la migration de ces mêmes boîtes aux lettres d'un système de messagerie à un autre, différent ou identique, n'est pas sans difficultés.

En effet, il est nécessaire de bien coordonner les tâches exécutées sur le ou les serveurs du premier système de messagerie devant migrer vers le deuxième système de messagerie et les tâches exécutées sur le ou les serveurs de ce deuxième système de messagerie. Il peut être également difficile de synchroniser le paramétrage des postes de travail au moment de la migration de la messagerie. Pendant la migration, chaque technicien chargé d'effectuer l'une de ces tâches doit s'informer auprès des autres techniciens intervenant de l'état d'avancement des autres tâches et doit attendre que les autres techniciens lui confirment que ces autres tâches sont correctement exécutées pour pouvoir commencer la sienne.

Malgré les nombreuses possibilités offertes à tous les acteurs intervenant pour communiquer entre eux, que ce soit par réunion physique ou par les moyens modernes de communication, l'extraordinaire difficulté à réellement synchroniser les tâches de ces acteurs conduit la plupart du temps à imposer un arrêt des services de messagerie complets pendant au moins un week-end pendant lequel ces les tâches sont effectuées. Il s'ensuit une période d'indisponibilité des boîtes aux lettres devant migrer. Par exemple, les boîtes aux lettres devant migrer ne reçoivent pas les messages qui sont envoyés pendant cette période d'indisponibilité au premier système de messagerie les hébergeant et qui leur sont pourtant destinés. US6298375 divulgue un système de migration entre deux serveurs de courrier électronique à travers un troisième serveur qui contiens une rectification de tous les données du permier serveur.

L'invention vise à obtenir un procédé pour faire migrer automatiquement un système de messagerie électronique vers un autre, ainsi qu'un dispositif pour sa mise en oeuvre, qui pallient les inconvénients de l'état de la technique et améliorent la continuité du service de messagerie pour le ou les utilisateur(s) de la boîte aux lettres devant migrer.

A cet effet, un premier objet de l'invention est un procédé pour faire migrer au moins une première boîte aux lettres de messagerie électronique d'au moins un premier système de messagerie électronique connecté à au moins un premier poste utilisateur de ladite première boîte aux lettres vers un deuxième système de messagerie électronique, la première boîte aux lettres de messagerie électronique ayant une première adresse électronique physique et au moins une première adresse électronique d'accès aux utilisateurs depuis l'extérieur,
caractérisé en ce que les premier et deuxième systèmes de messagerie sont chacun connectés à un centre de routage de messages, comportant une base de données annuaires des adresses associées aux boîtes aux lettres des systèmes de messagerie, et
au cours d'une première étape, on enregistre sur un serveur de pilotage de migration une demande de migration comprenant en association au moins la première adresse d'accès de la première boîte aux lettres et un instant prévu de migration de la première boîte aux lettres,
puis, pour chaque demande de migration enregistrée sur le serveur de pilotage de migration, successivement,
au cours d'une deuxième étape, on crée sur le deuxième système de messagerie électronique, une deuxième boîte aux lettres de messagerie électronique ayant une deuxième adresse électronique physique, et
lorsque des conditions prescrites, comprenant l'arrivée de l'instant de migration prévu, ont été vérifiées comme étant remplies, on exécute une troisième étape dans le deuxième système de messagerie électronique, au cours de laquelle on forme pour la deuxième boîte aux lettres, comme adresse électronique d'accès aux utilisateurs depuis l'extérieur, la première adresse d'accès de la première boîte aux lettres,
lorsque des conditions requises sur les première et deuxième boîtes aux lettres ont été vérifiées par le centre de routage de messages comme étant remplies,
on active, au cours d'une quatrième étape, dans le centre de routage de messages, pour la première boîte aux lettres, une file d'attente pour les éventuels messages arrivant qui ont comme destinataire la première adresse d'accès, afin qu'ils n'arrivent pas dans la première boîte aux lettres, et
au cours d'une cinquième étape, on change, dans la base de données annuaires, l'adresse électronique physique enregistrée pour la première boîte aux lettres en l'adresse électronique physique de la deuxième boîte aux lettres, on désactive la file d'attente et on transfère les messages retenus dans la file d'attente pour la première boîte aux lettres à la deuxième boîte aux lettres.

Grâce à l'invention, la migration de la première boîte aux lettres est effectuée de manière transparente pour son utilisateur aussi bien que pour les correspondants lui envoyant des messages pendant la migration, qui peuvent ne pas être informés de cette migration. Ainsi, le service de messagerie lié à la première boîte aux lettres devant migrer ne sera pas interrompu à cause de la migration et les messages envoyés à cette boîte aux lettres ne seront pas perdus et pourront bien être reçus par son utilisateur. L'invention permet en outre d'éviter de multiplier les interventions de techniciens, qui sont fastidieuses et complexes à gérer.

Suivant d'autres caractéristiques de l'invention,
- le deuxième système de messagerie électronique comporte au moins une troisième boîte aux lettres de messagerie électronique et est connecté à au moins un troisième poste utilisateur de ladite troisième boîte aux lettres, et la deuxième boîte aux lettres de messagerie électronique créée au cours de la deuxième étape comporte en outre comme adresse d'accès depuis le troisième poste utilisateur du deuxième système de messagerie électronique la première adresse d'accès, et on établit en outre au cours de la deuxième étape, dans le deuxième système de messagerie électronique, une redirection de la deuxième boîte aux lettres vers la première boîte aux lettres de manière à rediriger tout message arrivant à la deuxième boîte aux lettres vers la première boîte aux lettres, ladite redirection étant supprimée au cours de la troisième étape ;
- la base de données annuaires enregistre les adresses associées aux boîtes aux lettres des systèmes de messagerie, y compris leurs noms d'alias,

au cours de la troisième étape, la base de données annuaires communique le contact formé par les adresses et noms d'alias associés à la première adresse d'accès au deuxième système de messagerie électronique, qui l'enregistre dans une table de contacts prévue dans ce dernier, on forme comme adresse électronique supplémentaire d'accès aux utilisateurs depuis l'extérieur pour la deuxième boîte aux lettres les adresses et/ou noms d'alias associés dans ladite table de contacts au contact comportant la première adresse d'accès puis on supprime ce contact de la table ;
- plusieurs premiers systèmes de messagerie électronique connectés à au moins un premier poste utilisateur de boîtes aux lettres sont prévus ;
- le centre de routage de messages est apte à router des messages émis de l'extérieur et adressés à une boîte aux lettres de l'un quelconque des systèmes de messagerie, jusqu'à ce dernier, et est apte à router des messages émis d'une boîte aux lettres de l'un quelconque des systèmes de messagerie et adressés à une boîte aux lettres d'un autre quelconque des systèmes de messagerie, jusqu'à ce dernier ;
- entre la troisième étape et la quatrième étape, les systèmes de messagerie communiquent au centre de routage de messages une demande de synchronisation montante d'adresses, comprenant les adresses associées à leurs boîtes aux lettres,

le deuxième système de messagerie communique au centre de routage de messages une liste des adresses d'accès de la deuxième boîte aux lettres,
les conditions requises au cours de la quatrième étape comprennent la vérification par le centre de routage de messages que la demande de synchronisation montante reçue comprend les adresses d'accès de la liste reçue du deuxième système de messagerie pour les première et deuxième boîtes aux lettres ;
- les conditions prescrites pour exécuter la troisième étape comprennent des vérifications effectuées sur le poste utilisateur de la première boîte aux lettres ;
- des vérifications effectuées sur le poste utilisateur de la première boîte aux lettres sont effectuées une deuxième fois un temps prédéterminé après la première fois qu'elles sont exécutées et lorsque ces vérifications sont positives, ledit poste utilisateur communique au serveur de pilotage de migration des informations sur le type et la taille en mémoire de la première boîte aux lettres ;
- l'on choisit préalablement au traitement des demandes de migration entre un mode de fonctionnement avec lesdites vérifications pour exécuter la troisième étape et un mode de fonctionnement sans lesdites vérifications pour exécuter la troisième étape ;
- le deuxième système de messagerie est connecté à au moins un serveur de migration de données et, après la cinquième étape exécutée pour la première boîte aux lettres, on exécute une étape de transfert de données, au cours de laquelle le serveur de migration de données déclenche le transfert des données présentes dans la première boîte aux lettres du premier système de messagerie à la deuxième boîte aux lettres du deuxième système de messagerie ;
- le serveur de pilotage de migration enregistre dans sa base de données un identificateur de migration d'adresses effectuée pour la première boîte aux lettres pour laquelle la cinquième étape a été exécutée, l'étape de transfert de données étant exécutée par le serveur de migration de données pour la première boîte aux lettres associée à un identificateur de migration d'adresses effectuée dans la base de données du serveur de pilotage de migration ;
- dans le cas où la cinquième étape n'a pas été exécutée pour la première boîte aux lettres et si cette boîte aux lettres en dispose, le serveur de migration de données déclenche le transfert des données d'agenda de cette première boîte aux lettres du premier système de messagerie à la deuxième boîte aux lettres du deuxième système de messagerie ;
- après l'étape de transfert de données, le serveur de migration de données interroge le serveur de pilotage de migration pour savoir si il existe une autre boîte aux lettres pour laquelle la cinquième étape a été exécutée et, dans l'affirmative, le serveur de migration de données exécute l'étape de transfert de données pour la boîte aux lettres qui lui est indiquée par le serveur de pilotage de migration et pour laquelle la cinquième étape a été exécutée ;
- l'on choisit préalablement au traitement des demandes de migration entre un mode de fonctionnement avec étape de transfert de données et un mode de fonctionnement sans étape de transfert de données ;
- le deuxième système de messagerie est connecté à au moins un serveur de migration de données et, après la cinquième étape exécutée pour la première boîte aux lettres, on exécute une étape de transfert de données locales du poste utilisateur, au cours de laquelle le poste utilisateur de la première boîte aux lettres du premier système de messagerie déclenche le transfert des données présentes dans ce poste utilisateur à la deuxième boîte aux lettres du deuxième système de messagerie ;
- pour le poste utilisateur pour lequel l'étape de transfert de données locales a été exécutée, on change par défaut son paramétrage en un paramétrage prescrit compatible avec le deuxième système de messagerie ;
- l'on choisit préalablement au traitement des demandes de migration entre un mode de fonctionnement avec étape de transfert de données locales de postes utilisateurs et un mode de fonctionnement sans étape de transfert de données de postes utilisateurs ;
- pour l'enregistrement de la demande de migration au cours de la première étape, on saisit la demande de migration sur un poste d'administration connecté au serveur de pilotage de migration, on envoie la demande de migration saisie du poste d'administration au serveur de pilotage de migration et on enregistre la demande de migration dans une base de données du serveur de pilotage de migration ;
- le premier système de messagerie électronique comporte au moins une quatrième boîte aux lettres de messagerie électronique et est connecté à au moins un quatrième poste utilisateur de ladite quatrième boîte aux lettres, et on établit en outre au cours de la cinquième étape, dans le premier système de messagerie électronique, une redirection de la première boîte aux lettres vers la deuxième boîte aux lettres, de manière à rediriger tout message arrivant à la première boîte aux lettres vers la deuxième boîte aux lettres ;
- l'on supprime du premier système de messagerie la première boîte aux lettres pour laquelle au moins la cinquième étape a été exécutée.

Un deuxième objet de l'invention est un dispositif pour la mise en oeuvre du procédé de migration suivant l'une quelconque des revendications précédentes, caractérisé en ce qu'il comporte :
- un centre de routage de messages, destiné à être connecté aux premier et deuxième systèmes de messagerie et comportant une base de données annuaires des adresses associées aux boîtes aux lettres des premier et deuxième systèmes de messagerie,
- un serveur de pilotage de migration connecté au centre de routage de messages et apte à enregistrer au moins une demande de migration comprenant en association au moins la première adresse d'accès d'une première boîte aux lettres du premier système de messagerie et un instant prévu de migration de la première boîte aux lettres, le serveur de pilotage de migration comportant des moyens pour commander le traitement de chaque demande de migration enregistrée selon les deuxième à cinquième étapes,
- un serveur de migration de données destiné à être connecté aux systèmes de messagerie, le serveur de pilotage de migration étant connecté au serveur de migration de données et comportant des moyens de commande de celui-ci apte à lui faire exécuter une étape de transfert de données de la première boîte aux lettres à la deuxième boîte aux lettres pour la demande de migration traitée selon la cinquième étape.

L'invention sera mieux comprise à la lecture de la description qui va suivre, donnée uniquement à titre d'exemple non limitatif en référence aux dessins annexés, sur lesquels :
la figure 1 est un schéma du dispositif de migration suivant l'invention,
- la figure 2 est un organigramme du procédé de migration suivant l'invention mis en oeuvre par le dispositif de migration selon la figure 1.

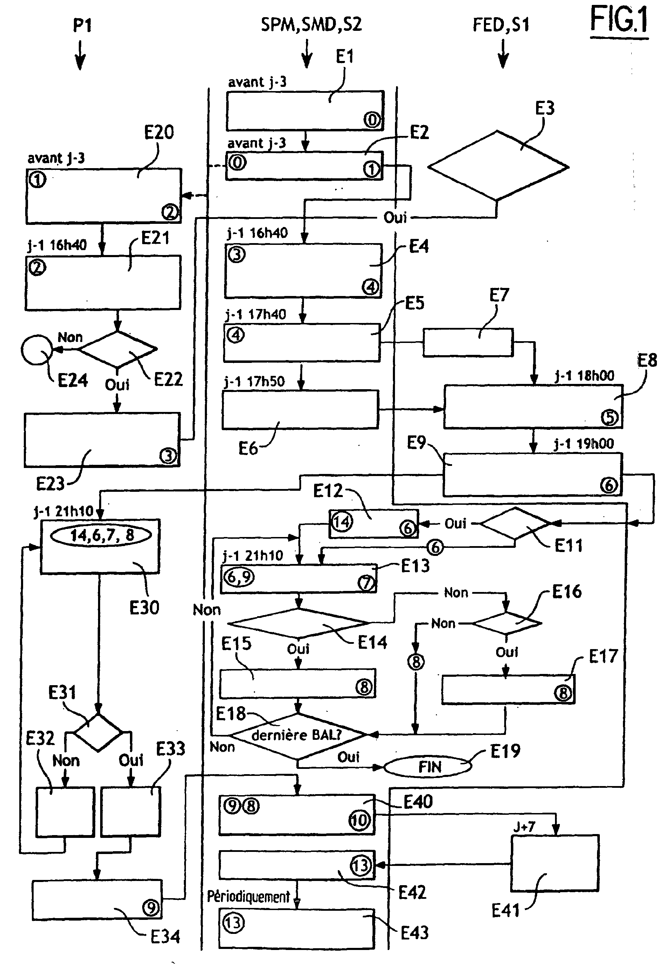

A la figure 1, plusieurs systèmes de messagerie électronique S1, S2, S3 comportant chacun leurs propres boîtes aux lettres de messagerie électronique sont représentés. On entend par boîte aux lettres une boîte aux lettres électronique dans son acception courante, c'est-à-dire une zone de mémoire sur un ordinateur ou un serveur, qui permet de stocker les messages qui sont reçus ou envoyés par courrier électronique. Des synonymes de boîte aux lettres sont boîte de courrier électronique, boîte de courriel, boîte courriel. Les boîtes aux lettres de messagerie électronique sont appelées ci-après boîtes.

Au moins un poste utilisateur respectivement P1, pouvant être un ordinateur ou un assistant numérique personnel du type PDA, est connecté au système S1. Une boîte BAL1 est affectée dans le système S1 au poste P1. Le cas échéant, plusieurs postes utilisateurs connectés au système S1 sont affectés à la boîte BAL1, par exemple un ou plusieurs postes P4 associés à une ou plusieurs boîtes respectives BAL4 du système S1.

La boîte BAL1 comporte sur le système S1 une adresse électronique physique ADP1 et au moins une adresse électronique AD1 d'accès aux utilisateurs depuis l'extérieur, c'est-à-dire depuis les autres postes connectés par le système S1 et par les postes des autres systèmes de messagerie. L'adresse d'accès AD1 est par exemple une adresse du type SMTP, telle que prénom.nom@domaine.com ou autres, une adresse d'alias se substituant à celle-ci et qui sert à l'affichage dans les carnets d'adresse et les messages de la boîte, telle que NOM PRENOM ou autres, une adresse du type X400. La boîte peut comporter plusieurs des adresses des types précités comme adresse d'accès. Par exemple, plusieurs adresses SMTP complémentaires sont prévues pour la boîte, pour conserver d'anciennes adresses et résoudre les problèmes posés par les noms et prénoms composés.

Les systèmes S1, S2, S3 de messagerie sont connectés à un centre FED de routage des messages, également appelé fédération de messageries. Le centre FED comporte au moins une connexion CX pour envoyer vers et recevoir des messages vers l'extérieur, par exemple vers le réseau Internet et des moyens SEC de sécurisation vis-à-vis des messages reçus depuis l'extérieur, tels que des relais filtrants antivirus. Le centre FED est apte à router des messages émis de l'extérieur et adressés à une boîte aux lettres de l'un quelconque des systèmes de messagerie S1, S2, S3 jusqu'à ce dernier, et est apte à router des messages émis d'une boîte aux lettres de l'un quelconque des systèmes de messagerie S1, S2, S3 et adressés à une boîte aux lettres d'un autre quelconque des systèmes de messagerie, jusqu'à ce dernier. En outre le centre FED comporte une base ANN de données annuaires répertoriant les adresses associées aux boîtes aux lettres des systèmes S1, S2, S3. Cette base ANN est mise à jour régulièrement, par exemple quotidiennement, par réception depuis chaque système S1, S2, S3 de messagerie, d'une demande de synchronisation montante contenant les adresse de chaque boîte aux lettres hébergée sur ceux-ci. Après chaque mise à jour, le centre FED renvoie dans une demande de synchronisation descendante à chaque système S1, S2, S3 de messagerie l'ensemble des adresses des boîtes aux lettres de tous les systèmes S1, S2, S3 de messagerie gérés par le centre FED. Chaque système S1, S2, S3 de messagerie ayant reçu une demande de synchronisation descendante met alors à jour son carnet d'adresses de système de messagerie, tenu à la disposition des postes gérés par ce système de messagerie.

Dans ce qui suit on suppose que le système S1 doit migrer vers le système S2. Par conséquent, on souhaite faire migrer toutes les boîtes du système S1 vers le système S2. Le procédé de migration est expliqué ci-dessous en référence à la boîte BAL1 du système S1, appelé système cédant, le système S2 étant appelé système prenant.

Un serveur SPM de pilotage de migration et, lorsque la migration de données doit être effectuée, un serveur SMD de migration de données, sont prévus. Le cas échéant, le serveur SPM de pilotage de migration est formé physiquement par plusieurs serveurs, de même que le serveur SMD de migration de données. En outre, le serveur SPM de pilotage de migration et le serveur SMD de migration de données peuvent être formés physiquement par le même serveur ou les mêmes serveurs. Le serveur SPM de pilotage de migration est apte à être connecté, par exemple par réseau, aux systèmes de messagerie S1, S2, S3, aux postes P1, P2, P3 gérés par les systèmes de messagerie S1, S2, S3, et au centre FED de routage des messages. Le serveur SMD de migration de données est apte à être connecté, par exemple par réseau, aux systèmes de messagerie S1, S2, S3. Le serveur SPM, de même que le serveur SMD, peuvent être localisés en tout endroit du dispositif, par exemple à proximité du système prenant S2.

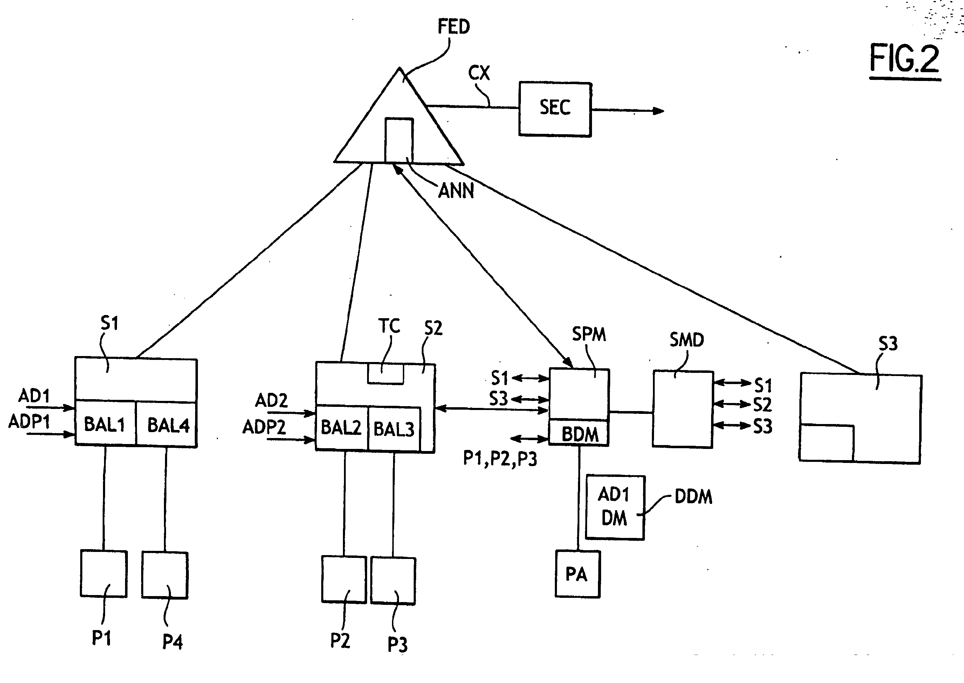

Au cours d'une étape E1, on enregistre sur le serveur SPM une demande DDM de migration comprenant au moins en association, l'adresse AD1 d'accès de la première boîte BAL1, appelé première adresse d'accès, et un instant DM prévu de migration de la première boîte BAL1. Par exemple pour ce faire, il est prévu un poste PA d'administration connecté au serveur SPM de pilotage de migration, sur lequel une personne saisit la demande DDM de migration. Le poste PA envoie la demande DDM de migration saisie au serveur SPM, qui enregistre la demande DDM dans une base BDM de données de celui-ci, en association avec un état de demande 0, les états étant indiqués de manière entourée à la figure 2.

Après l'étape E1, pour chaque demande DDM enregistrée sur le serveur SPM, le serveur SPM commande la création, au cours de l'étape E2, sur le deuxième système S2, d'une nouvelle boîte aux lettres de messagerie électronique BAL2, appelée deuxième boîte aux lettres BAL2, vers laquelle doit migrer la première boîte BAL1. Le serveur SPM exécute par exemple la deuxième étape E2 pour chaque demande DDM qui y est enregistrée en association avec un état de demande déterminé 0. La création de la deuxième boîte BAL2 peut avoir lieu plusieurs jours avant la date, à laquelle la migration est réellement effectuée.

La deuxième boîte BAL2 créée par le serveur SPM sur le deuxième système S2 comporte une deuxième adresse électronique physique ADP2 sur celui-ci, par conséquent différente de la première adresse électronique physique ADP1 de la première boîte BAL1 sur le premier système S1. Lorsque l'étape E2 est exécutée, il est associé à la demande DDM pour la première adresse AD1 d'accès associée initialement à l'état de demande 0, le nouvel état 1.

Le deuxième système S2 ne comporte initialement aucune boîte aux lettres ni poste utilisateur associé connecté à celui-ci, ou, ainsi que représenté, le deuxième système S2 comporte initialement une ou plusieurs boîtes aux lettres BAL3 autochtones, c'est-à-dire déjà hébergées à l'origine pour des postes utilisateurs P3 de celles-ci, connectés au système S2.

Dans l'exemple représenté aux figures, la deuxième boîte BAL2 est créée sur le système S2 avec une deuxième adresse d'accès AD2, qui ne permet d'accéder à la boîte BAL2 que depuis les postes utilisateurs P3 gérés par le système S2. Dans cet exemple, il est effectué au cours de l'étape E2, une redirection de la deuxième boîte BAL2 créée vers la première boîte BAL1, de manière à rediriger tout message arrivant à la deuxième boîte aux lettres BAL2 vers la première boîte aux lettres BAL1. Il est ainsi évité que les messages envoyés depuis les postes P3 à la deuxième boîte BAL2 par les utilisateurs connaissant l'existence de celle-ci sur le système S2 ne soient perdus et ne soient reçus par la deuxième boîte BAL2 que lorsque la date de migration effectuée est arrivée. Cette redirection permet donc d'assurer la continuité du service de messagerie vis-à-vis des utilisateurs gérés par le deuxième système de messagerie.

Après l'étape E2, le serveur SPM examine si des conditions prescrites, comprenant l'arrivée de l'instant DM de migration prévu au cours de l'étape E3, sont remplies pour les demandes DDM de migration pour lesquelles l'étape E1 a été exécutée, dans l'exemple précédent les demandes DDM ayant un état déterminé 1. Si ces conditions prescrites sont remplies, le serveur SPM commande l'exécution d'une étape E4 dans le deuxième système S2, au cours de laquelle on forme pour la deuxième boîte aux lettres BAL2, comme adresse électronique d'accès aux utilisateurs depuis l'extérieur, la première adresse AD1 d'accès de la première boîte aux lettres BAL1. Dans l'exemple précédent, l'exécution de l'étape E4 provoque l'état déterminé 4 pour la demande DDM dans le serveur SPM.

Des exemples d'actions supplémentaires exécutées au cours de l'étape E4 sont décrits ci-après. Au cours de l'étape E4, on fait passer dans la base de comptes utilisateurs du système de messagerie S2 un marqueur SYNCFED à vrai pour la boîte aux lettres BAL2. Dans l'exemple précité, ladite redirection est supprimée au cours de l'étape E4. En outre, au cours de l'étape E4, la base BDM de données annuaires ANN communique le contact qui y est enregistré et qui est formé par les adresses et noms d'alias associés à la première adresse AD1 d'accès au deuxième système S2, lequel l'enregistre dans une table TC de contacts prévue dans ce dernier. On forme comme adresse électronique supplémentaire d'accès aux utilisateurs depuis l'extérieur pour la deuxième boîte aux lettres BAL2 les adresses et/ou noms d'alias associés dans ladite table de contacts au contact comportant la première adresse d'accès AD1 puis on supprime ce contact de la table TC.

Après l'étape E4, dans l'exemple représenté, le serveur SPM extrait de sa base BDM de données, au cours de l'étape E5, la liste des boîtes devant migrer. Dans l'exemple précité, cette liste est extraite à partir des boîtes associées à un marqueur SYNCFED positionné à vrai dans le deuxième système S2.

Puis, après l'étape E5 ou E4, les étapes E6 et E7 sont effectuées. Au cours de l'étape E6, les systèmes de messagerie S1, S2, S3 communiquent au centre FED une demande de synchronisation montante d'adresses, comprenant les adresses associées aux leurs boîtes aux lettres qu'ils hébergent. Au cours de l'étape E7, le deuxième système S2 communique au centre FED une liste des adresses d'accès pour chacune des boîtes aux lettres pour lesquelles l'étape E4 a été exécutée, c'est-à-dire dans l'exemple précédent pour les boîtes aux lettres associées à un état 4 dans le serveur SPM, soit la deuxième boîte BAL2, ou la liste des boîtes devant migrer de l'étape E5.

Après les étapes E6 et E7, le centre FED examine au cours de l'étape E8 si des conditions requises sur les première et deuxième boîtes BAL1 et BAL2 sont remplies. Par exemple, le centre FED vérifie si la demande de synchronisation montante reçue à l'étape E6 du deuxième système S2 contient les adresses d'accès de la liste reçue du système S2 à l'étape E7 pour les première et deuxième boîtes BAL1 et BAL2. Dans la négative, la migration ne sera pas effectuée pour la boîte BAL1 vers la boîte BAL2 et le centre FED en informera le serveur SPM par écriture d'un message d'erreur, l'état n'évoluera plus pour cette boîte. Dans l'affirmative, le centre FED active pour la première boîte BAL1, une file d'attente retenant les éventuels messages lui arrivant de l'extérieur, qui ont comme destinataire la première adresse d'accès AD1, afin que ces messages n'arrivent pas à la première boîte BAL1, des moyens étant prévus dans le centre FED de routage de messages pour mettre en oeuvre cette file d'attente. Les messages arrivant au centre FED de routage de messages et ayant comme adresse l'adresse d'accès AD1 sont alors retenus et stockés dans la file d'attente activée et ne sont pas envoyés par le centre FED de routage de messages au premier système S1 de messagerie hébergeant la première boîte BAL1 associée à l'adresse d'accès AD1 pour laquelle la file d'attente est activée. La file d'attente étant activée, l'état passe à 5 dans le serveur SPM pour la première boîte BAL1. Dans l'affirmative à l'étape E8, il est passé à l'étape E9 pour les boîtes correspondantes.

A l'étape E9, le centre FED met à jour dans sa base ANN de données annuaires, à partir de la demande de synchronisation montante reçue, les adresses enregistrées pour les boîtes BAL1 et BAL2 des systèmes S1, S2, c'est-à-dire dans l'exemple précédent pour les boîtes ayant l'état 5. Le centre FED change dans sa base de données annuaires ANN l'adresse physique ADP1 de la première boîte BAL1 en l'adresse physique ADP2 de la deuxième boîte BAL2. Ainsi, tous les futurs messages destinés à la boîte BAL1 seront envoyés à la boîte BAL2. Puis la file d'attente pour la première boîte BAL1 est désactivée dans le centre FED de routage de messages et les éventuels messages retenus dans cette file d'attente et destinés à l'adresse d'accès S1 sont routés par le centre FED directement de celui-ci à la deuxième boîte BAL2 se trouvant dans le deuxième système S2 à l'adresse d'accès AD1 et l'adresse physique ADP2 de la deuxième boîte BAL1, et ce sans passer par le système S1. Le centre FED de routage communique au serveur SPM de pilotage de migration une information de migration d'adresse effectuée. Dans l'exemple précédent, l'état passe à 6 dans le serveur SPM pour la première boîte BAL1. La migration d'adresses a alors été effectuée de la première boîte BAL1 à la deuxième boîte BAL2. Lorsqu'une migration d'adresses d'une boîte aux lettres a été effectuée, il peut être passé à la migration d'adresse d'une autre boîte aux lettres signalée dans la demande de migration ou au traitement d'une autre demande de migration selon les étapes décrites ci-dessus.

Dans l'exemple représenté aux figures, il est en outre effectué au cours de l'étape E9, une redirection dans le premier système S1 de la première boîte BAL1 vers la deuxième boîte BAL2, de manière à rediriger vers la deuxième boîte BAL2 du deuxième système S2 tout message, qui serait envoyé au système S1 par le poste P4 géré par le système S1 à l'adresse d'accès AD1 de la première boîte BAL1. Il est ainsi évité que les messages envoyés depuis les postes P'1 à la première boîte BAL1 par les utilisateurs du système S1 ne soient perdus et ne soient pas reçus par la deuxième boîte BAL2. Cette redirection permet donc d'assurer la continuité du service de messagerie vis-à-vis des utilisateurs gérés par le premier système de messagerie. Cette redirection est par exemple effectuée par le fait que le premier système S1 sort vers le centre FED tous les messages envoyés depuis les postes P'1 à la boîte BAL1, le centre FED routant alors ces messages reçus du système S1 vers la deuxième boîte BAL2 du système S2. Cette redirection est supprimée dans le cas où la première boîte BAL1 est supprimée, ainsi que cela sera décrit à l'étape E41.

Il est choisi, préalablement au traitement des demandes de migration, entre un mode de fonctionnement avec transfert de données et un mode de fonctionnement sans transfert de données.

D'une manière générale, chaque mode de fonctionnement avec ou sans transfert de données et les autres modes de fonctionnement sont automatiques, sont enregistrés sur le serveur SPM et constituent chacun un scénario comprenant une description des actions à exécuter. Le choix du mode de fonctionnement est effectué dans la demande DDM de migration saisie sur le poste PA et enregistrée sur le serveur SPM.

Dans le cas où le mode de fonctionnement avec transfert de données a été sélectionné, les étapes suivantes sont exécutées pour les boîtes pour lesquelles l'étape E9 a été exécutée. L'étape E9 exécutée est par exemple accompagnée de l'enregistrement dans la base de données BDM du serveur SPM d'un identificateur de migration d'adresses effectuée pour la première boîte BAL1. Le mode de fonctionnement avec transfert de données sera exécuté pour les boîtes associées à l'identificateur de migration d'adresses effectuée dans le serveur SPM, ainsi que cela sera expliqué ci-dessous. On suppose ci-après que l'on doit transférer les données de la première boîte BAL1 vers la deuxième boîte BAL2.

Au cours de l'étape E11, le serveur SPM interroge, si le mode de fonctionnement avec transfert de données a été sélectionné avec intégration de données du premier système S1 ou sans intégration de données du premier système S1. Dans l'affirmative à l'étape E11, des données du premier système S1, concernant la première boîte BAL1, sont validées lors de l'étape E12.

Il est passé à l'étape E13 de début de migration de données. Dans la négative à l'étape E11, il est passé directement à l'étape E13.

Au cours de l'étape E13, le serveur SMD demande au serveur SPM de lui fournir les adresses d'une boîte dont les données doivent migrer. Le serveur SPM fournit alors par exemple au serveur SMD les adresses AD1 et ADP1 de la première boîte BAL1 dans le système S1 et fait passer à 7 son état associé.

Puis, au cours de l'étape E14, le serveur SMD interroge le serveur SPM pour savoir si les adresses que lui a foumies le serveur SPM sont celles d'une boîte qui a migré vers le système S2, c'est-à-dire pour laquelle l'étape E9 a été exécutée, et dans l'exemple précédent, qui est associée dans la base BDM du serveur SPM à un identificateur de migration d'adresses. Dans l'affirmative, ce qui est le cas pour la première boîte BAL1, le serveur SMD passe à l'étape E15. Dans la négative, le serveur SMD passe à l'étape E16, lors de laquelle le serveur SMD interroge le serveur SPM pour savoir si les adresses que lui a fournies le serveur SPM correspondent à une boîte d'un système de messagerie disposant ou non de données d'agenda ou calendrier. Dans l'affirmative à l'étape E16, ces données d'agenda sont intégrées lors de l'étape E17 aux données devant migrer de la première boîte BAL1 du système S1 à la deuxième boîte du système S2 et l'état associé dans le serveur SPM passe à 8. Dans la négative à l'étape E16 et après l'étape E17, il est passé à l'étape E18. Eventuellement, dans un mode de fonctionnement choisi à l'avance sur le serveur SPM, les étapes E16 et E17 ne sont pas mises en oeuvre et dans la négative à l'étape E14, il est passé directement à l'étape E18.

A l'étape E15, le serveur SMD déclenche un transfert de données présentes dans la première boîte BAL1 du premier système S1 à la deuxième boîte BAL2 du deuxième système S2 et fait passer à 8 l'état associé. Ces données comprennent par exemple d'anciens messages reçus ou émis par la première boîte BAL1 et stockés dans la boîte BAL1.

A l'étape E18, le serveur SMD interroge le serveur SPM pour savoir si il existe une autre boîte aux lettres pour laquelle la cinquième étape a été exécutée et, dans l'affirmative, le serveur SMD de migration de données retourne à l'étape E13 pour cette autre boîte aux lettres et exécute l'étape de transfert de données E14, E15, E16, E17 comme précédemment pour la boîte aux lettres qui lui est indiquée par le serveur de pilotage de migration SPM et pour laquelle l'étape E9 a été exécutée. Lorsqu'il ne reste plus de boîte pour laquelle l'étape E9 a été exécutée, le serveur SPM l'indique au serveur SMD à l'étape E18 et il est passé à l'étape E19 de fin.

Dans l'exemple représenté, les conditions prescrites pour exécuter l'étape E4 comprennent en outre des vérifications effectuées sur le poste utilisateur P1 de la première boîte aux lettres BAL1 au cours de l'étape E20 et déclenchées par le poste utilisateur sur autorisation du serveur SPM.

Il est choisi, préalablement au traitement des demandes de migration, entre un mode de fonctionnement avec lesdites vérifications pour exécuter l'étape E4 et un mode de fonctionnement sans lesdites vérifications pour exécuter l'étape E4. Lorsque ces vérifications exécutées sur le poste P1 sont positives, l'état associé à la première boîte BAL1 dans le serveur SPM passe de l'état initial 1 à l'état 2.

Puis ces vérifications sur le poste utilisateur de la première boîte aux lettres BAL1 sont effectuées une deuxième fois au cours de l'étape E22 un temps prédéterminé après la première fois qu'elles sont exécutées, peu avant l'instant de migration prévue, en un instant planifié au cours de l'étape précédente E21. Lorsque ces vérifications sont positives, ledit poste utilisateur P1 communique au serveur SPM de pilotage de migration des informations sur le type et la taille en mémoire de la première boîte aux lettres BAL1, fait passer à 3 l'état de la première boîte dans le serveur SPM, lors de l'étape E23. L'étape E23 est alors suivie de l'étape E4, lorsque l'étape E3 est exécutée. Lorsque ces vérifications sont négatives, il est mis fin au procédé pour cette boîte aux lettres BAL1 à l'étape E24 et ni la migration d'adresse, ni la migration de données n'est effectuée pour celle-ci.

En outre, il est choisi, préalablement au traitement des demandes de migration, entre un mode de fonctionnement avec étape de transfert de données locales de postes utilisateurs et un mode de fonctionnement sans étape de transfert de données de postes utilisateurs. Le choix du mode de fonctionnement avec étape de transfert de données locales est effectué par exemple lorsque le mode de fonctionnement avec lesdites vérifications effectuées sur le poste utilisateur P1 de la première boîte aux lettres BAL1, selon les étapes E20 à E23 est choisi au préalable.

Lorsque le mode de fonctionnement avec étape de transfert de données locales a été choisi, l'étape E9, lorsqu'elle a été exécutée, est suivie également de l'étape E30, lors de laquelle le poste utilisateur P1 de la première boîte aux lettres BAL1 du premier système de messagerie S1 demande au serveur SPM de pilotage de migration si les étapes préliminaires ont été réalisées. Si le serveur SPM de pilotage de migration lui répond que oui, le poste utilisateur P1 déclenche le transfert des données présentes dans le poste utilisateur P1 à la deuxième boîte aux lettres BAL2 du deuxième système de messagerie S2. Il est également possible, au lieu de cela, de simplement convertir le format des données de messagerie du poste utilisateur P1 au format utilisable par le logiciel de messagerie mis en oeuvre pour utiliser la deuxième boîte BAL2 du deuxième système de messagerie S2. Puis on change par défaut le paramétrage ou profil du poste P1 en un paramétrage prescrit compatible avec le deuxième système S2 de messagerie. Lors de l'étape suivante E31, un test de bon fonctionnement du paramétrage du poste P1 est déclenché sur le poste P1 par le serveur SPM au cours de l'étape E31. Si ce test est négatif, il est passé à l'étape E32, lors de laquelle une analyse d'erreurs, et/ou une réparation et/ou une relance du processus de migration de données locales est effectuée automatiquement sur le poste P1 et il est retourné à l'étape E30. Si ce test est positif, le serveur SPM déclenche la suppression de l'ancien paramétrage sur le poste P1 à l'étape E33. L'étape E33 est suivie d'une étape E34 de fin de traitement, où l'état associé à la première boîte BAL1 passe à 9.

Lorsque pour la première boîte BAL1, les étapes E34 et E 15 ou E 17 sont achevées, c'est-à-dire que son état associé est à 8 ou 9, la migration des données et des adresses est terminée pour celle-ci et un état correspondant 10 est positionné dans le serveur SPM pour celle-ci lors de l'étape E40.

Puis, éventuellement, la première boîte aux lettres BAL1, ou plus généralement les boîtes aux lettres du premier système S1, dont les adresses et les données ou seulement les adresses dans le cas du mode de fonctionnement sans migration de données ont migré dans le deuxième système S2, appelées anciennes boîtes aux lettres, sont supprimées dans le système S1 au cours de l'étape E41 suivant l'étape E40. L'état de la boîte BAL1 dans le serveur S2 passe alors à 13 lors de l'étape E42. Puis, périodiquement, les enregistrements concernant des anciennes boîtes associées à l'état 13 dans la base de données BDM du serveur SPM sont effacés au cours de l'étape E43.

A titre indicatif, la figure 2 comporte pour chaque étape l'instant d'exécution de celle-ci, sous la forme Jour (J-3, J-1, J+7), Heure, Minutes.

## Revendications

1. Procédé pour faire migrer au moins une première boîte aux lettres (BAL1) de messagerie électronique d'au moins un premier système (S1) de messagerie électronique connecté à au moins un premier poste (P1) utilisateur de ladite première boîte aux lettres (BAL1) vers un deuxième système de messagerie électronique (S2), la première boîte aux lettres (BAL1) de messagerie électronique ayant une première adresse électronique physique (ADP1) et au moins une première adresse électronique (AD1) d'accès aux utilisateurs depuis l'extérieur,
**caractérisé en ce que** les premier et deuxième systèmes de messagerie (S1, S2) sont chacun connectés à un centre (FED) de routage de messages, comportant une base de données annuaires (ANN) des adresses associées aux boîtes aux lettres des systèmes de messagerie (S1, S2), et
au cours d'une première étape (E1), on enregistre sur un serveur (SPM) de pilotage de migration une demande (DDM) de migration comprenant en association au moins la première adresse (AD1) d'accès de la première boîte aux lettres (BAL1) et un instant (DM) prévu de migration de la première boîte aux lettres (BAL1),
puis, pour chaque demande (DDM) de migration enregistrée sur le serveur (SPM) de pilotage de migration, successivement,
au cours d'une deuxième étape (E2), on crée sur le deuxième système de messagerie électronique (S2), une deuxième boîte aux lettres (BAL2) de messagerie électronique ayant une deuxième adresse électronique physique (ADP2), et
lorsque des conditions prescrites (E3, E20, E21, E22, E23), comprenant l'arrivée (E3) de l'instant (DM) de migration prévu, ont été vérifiées comme étant remplies, on exécute une troisième étape (E4) dans le deuxième système de messagerie électronique (S2), au cours de laquelle on forme pour la deuxième boîte aux lettres (BAL2), comme adresse électronique d'accès aux utilisateurs depuis l'extérieur, la première adresse (AD1) d'accès de la première boîte aux lettres (BAL1),
lorsque des conditions requises sur les première et deuxième boîtes aux lettres (BAL1, BAL2) ont été vérifiées (E5, E6, E7, E8) par le centre (FED) de routage de messages comme étant remplies,
on active, au cours d'une quatrième étape (E8), dans le centre (FED) de routage de messages, pour la première boîte aux lettres (BAL1), une file d'attente pour les éventuels messages arrivant qui ont comme destinataire la première adresse (AD1) d'accès, afin qu'ils n'arrivent pas dans la première boîte aux lettres (BAL1), et
au cours d'une cinquième étape (E9), on change, dans la base de données annuaires (ANN), l'adresse électronique physique (ADP1) enregistrée pour la première boîte aux lettres (BAL1) en l'adresse électronique physique (ADP2) de la deuxième boîte aux lettres (BAL2), on désactive la file d'attente et on transfère les messages retenus dans la file d'attente pour la première boîte aux lettres (BAL1) à la deuxième boîte aux lettres (BAL2).

2. Procédé de migration suivant la revendication 1, **caractérisé en ce que** le deuxième système de messagerie électronique (S2) comporte au moins une troisième boîte aux lettres (BAL3) de messagerie électronique et est connecté à au moins un troisième poste utilisateur (P3) de ladite troisième boîte aux lettres (BAL3), et la deuxième boîte aux lettres (BAL2) de messagerie électronique créée au cours de la deuxième étape (E2) comporte en outre comme adresse (AD1) d'accès depuis le troisième poste (P3) utilisateur du deuxième système de messagerie électronique (S2) la première adresse (AD1) d'accès, et on établit en outre au cours de la deuxième étape (E2), dans le deuxième système de messagerie électronique (S2), une redirection de la deuxième boîte aux lettres (BAL2) vers la première boîte aux lettres (BAL1) de manière à rediriger tout message arrivant à la deuxième boîte aux lettres (BAL2) vers la première boîte aux lettres (BAL1), ladite redirection étant supprimée au cours de la troisième étape (E4).

3. Procédé de migration suivant l'une quelconque des revendications précédentes, **caractérisé en ce que**
la base de données annuaires (ANN) enregistre les adresses associées aux boîtes aux lettres des systèmes de messagerie (S1, S2), y compris leurs noms d'alias,
au cours de la troisième étape (E4), la base de données annuaires (ANN) communique le contact formé par les adresses et noms d'alias associés à la première adresse (AD1) d'accès au deuxième système de messagerie électronique (S2), qui l'enregistre dans une table (TC) de contacts prévue dans ce dernier, on forme comme adresse électronique supplémentaire d'accès aux utilisateurs depuis l'extérieur pour la deuxième boîte aux lettres (BAL2) les adresses et/ou noms d'alias associés dans ladite table (TC) de contacts au contact comportant la première adresse d'accès (AD1) puis on supprime ce contact de la table (TC).

4. Procédé de migration suivant l'une quelconque des revendications précédentes, **caractérisé en ce que** plusieurs premiers systèmes (S1, S3) de messagerie électronique connectés à au moins un premier poste utilisateur de boîtes aux lettres sont prévus.

5. Procédé de migration suivant l'une quelconque des revendications précédentes, **caractérisé en ce que** le centre (FED) de routage de messages est apte à router des messages émis de l'extérieur et adressés à une boîte aux lettres (BAL1, BAL2, BAL3) de l'un quelconque des systèmes de messagerie (S1, S2), jusqu'à ce dernier, et est apte à router des messages émis d'une boîte aux lettres (BAL1, BAL2, BAL3) de l'un quelconque des systèmes de messagerie (S1, S2) et adressés à une boîte aux lettres (BAL1, BAL2, BAL3) d'un autre quelconque des systèmes de messagerie (S2, S1), jusqu'à ce dernier.

6. Procédé de migration suivant l'une quelconque des revendications précédentes, **caractérisé en ce que**
entre la troisième étape (E4) et la quatrième étape (E8), les systèmes de messagerie (S1, S2) communiquent (E6) au centre (FED) de routage de messages une demande de synchronisation montante d'adresses, comprenant les adresses associées à leurs boîtes aux lettres (BAL1, BAL2),
le deuxième système de messagerie (S2) communique (E7) au centre (FED) de routage de messages une liste des adresses d'accès (AD1) de la deuxième boîte aux lettres (BAL2),
les conditions requises au cours de la quatrième étape (E8) comprennent la vérification par le centre (FED) de routage de messages que la demande de synchronisation montante reçue comprend les adresses d'accès de la liste reçue du deuxième système de messagerie (S2) pour les première et deuxième boîtes aux lettres (BAL1, BAL2).

7. Procédé de migration suivant l'une quelconque des revendications précédentes, **caractérisé en ce que** les conditions prescrites (E3, E20, E21, E22, E23) pour exécuter la troisième étape (E4) comprennent des vérifications (E20, E21, E22, E23) effectuées sur le poste utilisateur (P1) de la première boîte aux lettres (BAL1).

8. Procédé de migration suivant la revendication 7, **caractérisé en ce que** des vérifications effectuées sur le poste utilisateur de la première boîte aux lettres (BAL1) sont effectuées une deuxième fois (E22) un temps prédéterminé après la première fois (E20) qu'elles sont exécutées et lorsque ces vérifications (E20, E22) sont positives, ledit poste utilisateur (P1) communique (E23) au serveur (SPM) de pilotage de migration des informations sur le type et la taille en mémoire de la première boîte aux lettres (BAL1).

9. Procédé de migration suivant l'une quelconque des revendications 7 et 8, **caractérisé en ce que** l'on choisit préalablement au traitement des demandes de migration entre un mode de fonctionnement avec lesdites vérifications (E20, E21, E22, E23) pour exécuter la troisième étape (E4) et un mode de fonctionnement sans lesdites vérifications (E20, E21, E22, E23) pour exécuter la troisième étape (E4).

10. Procédé de migration suivant l'une quelconque des revendications précédentes, **caractérisé en ce que** le deuxième système de messagerie (S2) est connecté à au moins un serveur (SMD) de migration de données et, après la cinquième étape (E9) exécutée pour la première boîte aux lettres (BAL1), on exécute une étape (E15, E17) de transfert de données, au cours de laquelle le serveur (SMD) de migration de données déclenche (E15, E17) le transfert des données présentes dans la première boîte aux lettres (BAL1) du premier système de messagerie (S1) à la deuxième boîte aux lettres (BAL2) du deuxième système de messagerie (S2).

11. Procédé de migration suivant la revendication 10, **caractérisé en ce que** le serveur (SPM) de pilotage de migration enregistre dans sa base de données (BDM) un identificateur de migration d'adresses effectuée pour la première boîte aux lettres (BAL1) pour laquelle la cinquième étape (E9) a été exécutée, l'étape (E15, E17) de transfert de données étant exécutée par le serveur (SMD) de migration de données pour la première boîte aux lettres (BAL1) associée à un identificateur de migration d'adresses effectuée dans la base (BDM) de données du serveur de pilotage de migration (SPM).

12. Procédé de migration suivant la revendication 10 ou 11, **caractérisé en ce que** dans le cas où la cinquième étape (E9) n'a pas été exécutée pour la première boîte aux lettres (BAL1) et si cette boîte aux lettres en dispose, le serveur (SMD) de migration de données déclenche le transfert (E17) des données d'agenda de cette première boîte aux lettres (BAL1) du premier système de messagerie (S1) à la deuxième boîte aux lettres (BAL2) du deuxième système de messagerie (S2).

13. Procédé de migration suivant l'une quelconque des revendications 10 à 12, **caractérisé en ce qu'**après l'étape (E15, E17) de transfert de données, le serveur (SMD) de migration de données interroge (E18) le serveur de pilotage de migration (SPM) pour savoir si il existe une autre boîte aux lettres pour laquelle la cinquième étape (E9) a été exécutée et, dans l'affirmative, le serveur (SMD) de migration de données exécute l'étape (E15, E17) de transfert de données pour la boîte aux lettres qui lui est indiquée par le serveur de pilotage de migration (SPM) et pour laquelle la cinquième étape (E9) a été exécutée.

14. Procédé de migration suivant l'une quelconque des revendications 10 à 13, **caractérisé en ce que** l'on choisit préalablement au traitement des demandes de migration entre un mode de fonctionnement avec étape (E15, E17) de transfert de données et un mode de fonctionnement sans étape (E15, E17) de transfert de données.

15. Procédé de migration suivant l'une quelconque des revendications précédentes, **caractérisé en ce que** le deuxième système de messagerie (S2) est connecté à au moins un serveur (SMD) de migration de données et, après la cinquième étape (E4) exécutée pour la première boîte aux lettres (BAL1), on exécute une étape (E30) de transfert de données locales du poste utilisateur (P1), au cours de laquelle le poste utilisateur (P1) de la première boîte aux lettres (BAL1) du premier système de messagerie (S1) déclenche le transfert des données présentes dans ce poste utilisateur (P1) à la deuxième boîte aux lettres (BAL2) du deuxième système de messagerie (S2).

16. Procédé de migration suivant la revendication 15, **caractérisé en ce que** pour le poste utilisateur (P1) pour lequel l'étape (E30) de transfert de données locales a été exécutée, on change par défaut son paramétrage en un paramétrage prescrit compatible avec le deuxième système (S2) de messagerie.

17. Procédé de migration suivant l'une quelconque des revendications 15 et 16, **caractérisé en ce que** l'on choisit préalablement au traitement des demandes de migration entre un mode de fonctionnement avec étape (E30) de transfert de données locales de postes utilisateurs et un mode de fonctionnement sans étape (E30) de transfert de données de postes utilisateurs.

18. Procédé de migration suivant l'une quelconque des revendications précédentes, **caractérisé en ce que** pour l'enregistrement de la demande de migration (DDM) au cours de la première étape (E1), on saisit la demande de migration sur un poste (PA) d'administration connecté au serveur (SPM) de pilotage de migration, on envoie la demande de migration saisie (DDM) du poste (PA) d'administration au serveur (SPM) de pilotage de migration et on enregistre la demande de migration (DDM) dans une base de données (TC) du serveur (SPM) de pilotage de migration.

19. Procédé de migration suivant l'une quelconque des revendications précédentes, **caractérisé en ce que** le premier système de messagerie électronique (S1) comporte au moins une quatrième boîte aux lettres (BAL4) de messagerie électronique et est connecté à au moins un quatrième poste utilisateur (P4) de ladite quatrième boîte aux lettres (BAL4), et on établit en outre au cours de la cinquième étape (E9), dans le premier système de messagerie électronique (S1), une redirection de la première boîte aux lettres (BAL1) vers la deuxième boîte aux lettres (BAL2), de manière à rediriger tout message arrivant à la première boîte aux lettres (BAL1) vers la deuxième boîte aux lettres (BAL2).

20. Procédé de migration suivant l'une quelconque des revendications précédentes, **caractérisé en ce que** l'on supprime (E41) du premier système (S1) de messagerie la première boîte aux lettres (BAL1) pour laquelle au moins la cinquième étape (E9) a été exécutée.

21. Dispositif pour la mise en oeuvre du procédé de migration suivant l'une quelconque des revendications précédentes, **caractérisé en ce qu'**il comporte :
- un centre (FED) de routage de messages, destiné à être connecté aux premier et deuxième systèmes de messagerie (S1, S2) et comportant une base de données annuaires (ANN) des adresses associées aux boîtes aux lettres des premier et deuxième systèmes de messagerie (S1, S2),
- un serveur (SPM) de pilotage de migration connecté au centre (FED) de routage de messages et apte à enregistrer au moins une demande de migration (DDM) comprenant en association au moins la première adresse (AD1) d'accès d'une première boîte aux lettres (BAL1) du premier système de messagerie (S1) et un instant (DM) prévu de migration de la première boîte aux lettres (BAL1), le serveur (SPM) de pilotage de migration comportant des moyens pour commander le traitement de chaque demande de migration (DDM) enregistrée selon les deuxième à cinquième étapes,
- un serveur (SMD) de migration de données destiné à être connecté aux systèmes de messagerie (S1, S2, S3), le serveur (SPM) de pilotage de migration étant connecté au serveur (SMD) de migration de données et comportant des moyens de commande de celui-ci apte à lui faire exécuter une étape de transfert de données de la première boîte aux lettres (BAL1) à la deuxième boîte aux lettres (BAL2) pour la demande de migration (DDM) traitée selon la cinquième étape (E9).

## Claims

1. Method for causing at least one first electronic mailbox (BAL1) of at least one first electronic messaging system (S1) connected to at least one first user station (P1) of said first mailbox (BAL1) to migrate towards a second electronic messaging system (S2), the first electronic mailbox (BAL1) having a first physical electronic address (ADP1) and at least one electronic access address (AD1) for outside users,
**characterized in that** the first and second messaging systems (S1, S2) are each connected to a message routing centre (FED) comprising a directory database (ANN) of addresses associated with the mailboxes of the messaging systems (S1, S2), and
during a first step (E1), on a migration piloting server (SPM), a migration request (DDM) is recorded comprising in association at least the first access address (AD1) of the first mailbox (BAL1) and a planned migration instant (DM) from the first mailbox (BAL1),
then, for each migration request (DDM) recorded on the migration piloting server (SPM), successively,
during a second step (E2), on the second electronic messaging system (S2), a second electronic mailbox (BAL2) is created having a second physical electronic address (ADP2), and
when prescribed conditions (E3, E20, E21, E22, E23), comprising the arrival (E3) of the planned migration instant (DM), have been verified as being fulfilled, a third step (E4) is conducted in the second electronic messaging system (S2) during which the first access address (AD1) of the first mailbox (BAL1) is used to form the access address for outside users of the second mailbox (BAL2),
when the conditions required on the first and second mailboxes (BAL1, BAL2) have been verified (E5, E6, E7, E8) by the message routing centre (FED) as being fulfilled,
during a fourth step (E8), in the message routing centre (FED), a queue is activated for the first mailbox (BAL1) for any incoming messages whose addressee is the first access address (AD1), so that they do not arrive in the first mailbox (BAL1), and
during a fifth step (E9), in the directory database (ANN), the physical electronic address (AP1) recorded for the first mailbox (BAL1) is changed into the physical electronic address (ADP2) of the second mailbox (BAL2), the queue is deactivated and the messages retained in the queue for the first mailbox (BAL1) are transferred to the second mailbox (BAL2).

2. Migration method as in claim 1, **characterized in that** the second electronic messaging system (S2) comprises at least one third electronic mailbox (BAL3) and is connected to at least one third user station (P3) of said third mailbox (BAL3), and the second electronic mailbox (BAL2) created during the second step (E2) also comprises the first access address (AD1) as access address (AD1) from the third user station (P3) of the second electronic messaging system (S2), and also during the second step (E2) in the second electronic messaging system (S2) a redirection is set up from the second mailbox (BAL2) towards the first mailbox (BAL1) so as to redirect any message arriving in the second mailbox (BAL2) towards the first mailbox (BAL1), said redirection being deleted during the third step (E4).

3. Migration method as in any of the preceding claims, **characterized in that**:
the directory database (ANN) records the addresses associated with the mailboxes of the messaging systems (S1,S2) including their alias names,
during the third step (E4) the directory database (ANN) communicates the contact, formed by the addresses and alias names associated with the first access address (AD1), to the second electronic messaging system (S2) which records the same in a contact table (TC) provided in the latter, the additional electronic access address of the second mailbox (BAL2) for outside users is formed of those addresses and/or alias names in said contact table (TC) associated with the contact comprising the first access address (AD1), then this contact is removed from the table (TC).

4. Migration method as in any of the preceding claims, **characterized in that** several first electronic messaging systems (S1, S3) are provided that are connected to at least one first user station of mailboxes.

5. Migration method as in any of the preceding claims, **characterized in that** the message routing centre (FED) is able to route messages sent from the outside and addressed to a mailbox (BAL1, BAL2, BAL3) of any of the messaging systems (S1, S2) to said system, and is able to route messages sent from a mailbox (BAL1, BAL2, BAL3) of any of the messaging systems (S1, S2) and addressed to a mailbox (BAL1, BAL2, BAL3) of any of the other messaging systems (S2, S1) to said system.

6. Migration method as in any of the preceding claims, **characterized in that**:
between the third step (E4) and fourth step (E8) the messaging systems (S1, S2) communicate (E6), to the message routing centre (FED), a positive-going address synchronization request comprising the addresses associated with their mailboxes (BAL1, BAL2).
the second messaging system (S2) communicates (E7) to the message routing centre (FED) a list of access addresses (AD1) of the second mailbox (BAL2),
the conditions required during the fourth step (E8) comprise verification by the message routing centre (FED) that the received positive-going synchronization request comprises the access addresses of the list received from the second messaging system (S2) for the first and second mailboxes (BAL1, BAL2).

7. Migration method as in any of the preceding claims **characterized in that** the prescribed conditions (E3, E20, E21, E22, E23) for conducting the third step (E4) comprise verifications (E20, E21, E22, E23) performed on the user station (P1) of the first mailbox (BAL1).

8. Migration method as in claim 7, **characterized in that** verifications made on the user station of the first mailbox (BAL1) are performed a second time (E22) at a preset period after the first time (E20) they were performed, and if these verifications (E20, E22) are positive, said user station (P1) communicates (E23) to the migration piloting server (SPM) information on the memory type and size of the first mailbox (BAL1).

9. Migration method as in either of claims 7 and 8, **characterized in that**, prior to the processing of migration requests, a choice is made between a functioning mode with said verifications (E20, E21, E22, E23) for executing step three (E4) and a functioning mode without said verifications (E20, E21, E22, E23) for executing step three (E4).

10. Migration method as in any of the preceding claims, **characterized in that** the second messaging system (S2) is connected to at least one data migration server (SMD) and, after the fifth step (E9) executed for the first mailbox (BAL1), a data transfer step (E15, E17) is conducted during which the data migration server (SMD) triggers (E15, E17) the transfer of data present in the first mailbox (BAL1) of the first messaging system (S1) to the second mailbox (BAL2) of the second messaging system (S2).

11. Migration method as in claim 10, **characterized in that** the migration piloting server (SPM) records in its database (BDM) an identifier of address migration executed for the first mailbox (BAL1) for which the fifth step (E9) has been executed, the data transfer step (E15, E17) being executed by the data migration server (SMD) for the first mailbox (BAL1) associated with an identifier of address migration made in the database (BDM) of the migration piloting server (SPM).

12. Migration method as in claim 10 or 11, **characterized in that** in cases when the fifth step (E9) has not been executed for the first mailbox (BAL1), and if this mailbox has use thereof, the data migration server (SMD) triggers the transfer (E17) of diary data from this first mailbox (BAL1) of the first messaging system (S1) to the second mailbox (BAL2) of the second messaging system (S2).

13. Migration method as in any of claims 10 to 12, **characterized in that** after data transfer step (E15, E17) the data migration server (SMD) queries (E18) the migration piloting server (SPM) to know whether another mailbox exists for which step five (E9) has been executed and, in the affirmative, the data migration server (SMD) executes data transfer step (E15, E17) for the mailbox indicated to it by the migration piloting server (SPM) and for which step five (E9) has been executed.

14. Migration method as in any of claims 10 to 13, **characterized in that**, prior to processing of the migration requests, a choice is made between a functioning mode with data transfer step (E15, E17) and a functioning mode without data transfer step (E15, E17).

15. Migration method as in any of the preceding claims, **characterized in that** the second messaging system (S2) is connected to at least one data migration server (SMD) and, after step five (E4) executed for the first mailbox (BAL1), a local data transfer step (E30) is executed from the user station (P1) during which the user station (P1) of the first mailbox (BAL1) of the first messaging system (S1) triggers the transfer of data present in this user station (P1) to the second mailbox (BAL2) of the second messaging system (S2).

16. Migration method as in claim 15, **characterized in that** for the user station (P1), for which local data transfer step (E30) has been executed, the parameter settings are changed by default into prescribed parameter settings compatible with the second messaging system (S2).

17. Migration method as in either of claims 15 and 16, **characterized in that**, prior to processing of the migration requests, a choice is made between a functioning mode with local data transfer step (E30) from user stations and a functioning mode without data transfer step (E30) from user stations.

18. Migration method as in any of the preceding claims, **characterized in that**, to record the migration request (DDM) during step one (E1), the migration request is entered onto an administration station(PA) connected to the migration piloting server (SPM), the entered migration request (DDM) is sent from the administration station (PA) to the migration piloting server (SPM) and the migration request(DDM)is recorded in a database (TC) of the migration piloting server (SPM).

19. Migration method as in any of the preceding claims, **characterized in that** the first electronic messaging system (S1) comprises at least one fourth electronic mailbox (BAL4) and is connected to at least one fourth user station (P4) of said fourth mailbox (BAL4), and in addition during step five (E9) in the first electronic messaging system (S1) a redirection is set up from the first mailbox (BAL1) to the second mailbox (BAL2) so as to redirect any message arriving in the first mailbox (BAL1) to the second mailbox (BAL2).

20. Migration method as in any of the preceding claims **characterized in that** the first mailbox (BAL1) for which at least the fifth step (E9) has been executed is removed (E41) from the first messaging system (S1).

21. Apparatus for implementing the migration method as in any of the preceding claims, **characterized in that** it comprises:
- a message routing centre (FED) intended to be connected to the first and second messaging systems (S1, S2) and containing a directory database (ANN) of the addresses associated with the mailboxes of the first and second messaging systems (S1, S2),
- a migration piloting server (SPM) connected to the message routing centre (FED) and able to record at least one migration request (DDM) containing in association at least the first access address (AD1) of a first mailbox (BAL1) of the first messaging system (S1) and a planned migration instant (DM) from the first mailbox (BAL1), the migration piloting server (SPM) comprising means for commanding the processing of each migration request (DDM) recorded according to steps two to five,
- a data migration server (SMD) intended to be connected to the messaging systems (S1, S2, S3), the migration piloting server (SPM) being connected to the data migration server (SMD) and comprising means for commanding the latter able to cause it to execute a data transfer step from the first mailbox (BAL1) to the second mailbox (BAL2) for the migration request (DDM) processed as per the step five (E9).

## Patentansprüche

1. Verfahren, um wenigstens einen ersten Briefkasten (BAL1) zur elektronischen Nachrichtenübermittlung von wenigstens einem ersten elektronischen Nachrichtenübermittlungssystem (S1), das mit wenigstens einem ersten Benutzerplatz (P1) des ersten Briefkastens (BAL1) verbunden ist, zu einem zweiten elektronischen Nachrichtenübermittlungssystem (S2) zu migrieren, wobei der erste Briefkasten (BAL1) zur elektronischen Nachrichtenübermittlung eine erste physische elektronische Adresse (ADP1) und wenigstens eine erste elektronische Zugangsadresse (AD1) für die Benutzer von außen aufweist,
**dadurch gekennzeichnet, daß** das erste und das zweite Nachrichtenübermittlungssystem (S1, S2) jeweils mit einem Nachrichten-Routingzentrum (FED) verbunden sind, das eine Teilnehmerdatenbank (ANN) der Adressen umfaßt, die den Briefkästen der Nachrichtenübermittlungssysteme (S1, S2) zugewiesen sind, und
während eines ersten Schritts (E1) auf einem Migrationssteuerungsserver (SPM) eine Migrationsanfrage (DDM) registriert wird, welche in Verbindung wenigstens die erste Zugangsadresse (AD1) des ersten Briefkastens (BAL1) und einen Zeitpunkt (DM) umfaßt, der für die Migration des ersten Briefkastens (BAL1) vorgesehen ist,
danach, für jede Migrationsanfrage (DDM), die auf dem Migrationssteuerungsserver (SPM) registriert ist, nacheinander
während eines zweiten Schritts (E2) auf dem zweiten elektronischen Nachrichtenübermittlungssystem (S2) ein zweiter Briefkasten (BAL2) zur elektronischen Nachrichtenübermittlung erstellt wird, der eine zweite physische elektronische Adresse (ADP 2) aufweist, und
wenn die zuvor genannten Bedingungen (E3, E20, E21, E22, E23), welche das Eintreten (E3) des vorgesehenen Zeitpunkts (DM) für die Migration umfassen, nachweislich erfüllt wurden, ein dritter Schritt (E4) in dem zweiten elektronischen Nachrichtenübermittlungssystem (S2) ausgeführt wird, in dessen Verlauf für den zweiten Briefkasten (BAL2) als elektronische Zugangsadresse für die Benutzer von außen die erste Zugangsadresse (AD1) des ersten Briefkastens (BAL1) erstellt wird,
wenn die für den ersten und den zweiten Briefkasten (BAL1, BAL2) erforderlichen Bedingungen (E5, E6, E7, E8) vom Nachrichten-Routingzentrum (FED) geprüft und für erfüllt befunden wurden,
während eines vierten Schritts (E8) im Nachrichten-Routingzentrum (FED) für den ersten Briefkasten (BAL1) eine Warteschleife für die eventuell ankommenden Nachrichten aktiviert wird, die als Ziel die erste Zugangsadresse (AD1) aufweisen, damit sie nicht in dem ersten Briefkasten (BAL1) ankommen, und
während eines fünften Schritts (E9) in der Teilnehmerdatenbank (ANN) die elektronische physische Adresse (ADP1), die für den ersten Briefkasten (BAL1) registriert ist, in die elektronische physische Adresse (ADP2) des zweiten Briefkastens (BAL2) geändert wird, die Warteschleife deaktiviert wird und die Nachrichten, die in der Warteschleife für den ersten Briefkasten (BAL1) behalten wurden, zum zweiten Briefkasten (BAL2) übertragen werden.

2. Migrationsverfahren nach Anspruch 1, **dadurch gekennzeichnet, daß** das zweite elektronische Nachrichtenübermittlungssystem (S2) wenigstens einen dritten Briefkasten (BAL3) zur elektronischen Nachrichtenübermittlung umfaßt und mit wenigstens einem dritten Benutzerplatz (P3) des dritten Briefkastens (BAL3) verbunden ist, und der zweite Briefkasten (BAL2) zur elektronischen Nachrichtenübermittlung, der während des zweiten Schritts (E2) erstellt wurde, ferner als Zugangsadresse (AD1) von dem dritten Benutzerplatz (P3) des zweiten elektronischen Nachrichtenübermittlungssystems (S2) aus die erste Zugangsadresse (AD1) umfaßt, und ferner während des zweiten Schritts (E2) in dem zweiten elektronischen Nachrichtenübermittlungssystem (S2) eine Umleitung des zweiten Briefkastens (BAL2) zum ersten Briefkasten (BAL1) hin erfolgt, so daß alle Nachrichten, die in dem zweiten Briefkasten (BAL2) ankommen, zum ersten Briefkasten (BAL1) umgeleitet werden, wobei die Umleitung während des dritten Schritts (E4) beseitigt wird.

3. Migrationsverfahren nach einem der vorhergehenden Ansprüche, **dadurch gekennzeichnet, daß**
die Teilnehmerdatenbank (ANN) die Adressen registriert, die den Briefkästen der Nachrichtenübermittlungssysteme (S1, S2) zugewiesen sind, einschließlich ihrer Alias-Namen,
während des dritten Schritts (E4) die Teilnehmerdatenbank (ANN) den Kontakt, der durch die Adressen und die Alias-Namen, die der ersten Zugangsadresse (AD1) zugewiesen sind, gebildet wird, dem zweiten elektronischen Nachrichtenübermittlungssystem (S2) mitteilt, welches ihn in einer Kontakttabelle (TC) registriert, die in diesem System vorgesehen ist, die Adressen und/oder Alias-Namen, die in der Kontakttabelle (TC) dem Kontakt zugewiesen sind, welcher die erste Zugangsadresse (AD1) aufweist, als zusätzliche elektronische Zugangsadresse für die Benutzer von außen für den zweiten Briefkasten (BAL2) gebildet werden, und danach der Kontakt der Tabelle (TC) beseitigt wird.

4. Migrationsverfahren nach einem der vorhergehenden Ansprüche, **dadurch gekennzeichnet, daß** mehrere elektronische Nachrichtenübermittlungssysteme (S1, S3), die mit wenigstens einem ersten Briefkasten-Benutzerplatz verbunden sind, vorgesehen sind.

5. Migrationsverfahren nach einem der vorhergehenden Ansprüche, **dadurch gekennzeichnet, daß** das Nachrichten-Routingzentrum (FED) geeignet ist, Nachrichten, die von außen gesendet werden und an einen Briefkasten (BAL1, BAL2, BAL3) eines der Nachrichtenübermittlungssysteme (S1, S2) adressiert sind, bis zu diesem Nachrichtenübermittlungssystem zu routen, und geeignet ist, Nachrichten, die von einem Briefkasten (BAL1, BAL2, BAL3) eines der Nachrichtenübermittlungssysteme (S1, S2) gesendet werden und an einen Briefkasten (BAL1, BAL2, BAL3) eines anderen Nachrichtenübermittlungssystems (S2, S1) adressiert sind, bis zu diesem Nachrichtenübermittlungssystem zu routen.

6. Migrationsverfahren nach einem der vorhergehenden Ansprüche, **dadurch gekennzeichnet, daß**
zwischen dem dritten Schritt (E4) und dem vierten Schritt (E8) die Nachrichtenübermittlungssysteme (S1, S2) dem Nachrichten-Routingzentrum (FED) eine Anfrage zur aufsteigenden Synchronisierung von Adressen übermitteln (E6), welche die Adressen umfaßt, die ihren Briefkästen (BAL1, BAL2) zugewiesen sind,
das zweite Nachrichtenübermittlungssystem (S2) dem Nachrichten-Routingzentrum (FED) eine Liste der Zugangsadressen (AD1) des zweiten Briefkastens (BAL2) übermittelt,
die Bedingungen, die während des vierten Schritts (E8) gefordert werden, umfassen, daß das Nachrichten-Routingzentrum (FED) überprüft, ob die empfangene Anfrage zur aufsteigenden Synchronisierung die Zugangsadressen der erhaltenen Liste des zweiten Nachrichtenübermittlungssystems (S2) für den ersten und den zweiten Briefkasten (BAL1, BAL2) umfaßt.

7. Migrationsverfahren nach einem der vorhergehenden Ansprüche, **dadurch gekennzeichnet, daß** die vorgeschriebenen Bedingungen (E3, E20, E21, E22, E23) für das Ausführen des dritten Schritts (E4) Überprüfungen (E20, E21, E22, E23) umfassen, die auf dem Benutzerplatz (P1) des ersten Briefkastens (BAL1) ausgeführt werden.

8. Migrationsverfahren nach Anspruch 7, **dadurch gekennzeichnet, daß** auf dem Benutzerplatz des ersten Briefkastens (BAL1) ausgeführte Überprüfungen eine vorbestimmte Zeit nach dem ersten Mal (E20), zu dem sie ausgeführt werden, ein zweites Mal (E22) ausgeführt werden, und - falls die Überprüfungen (E20, E22) positiv sind - der Benutzerplatz (P1) dem Migrationssteuerungsserver (SPM) Informationen über die Art und die Größe des Speichers des ersten Briefkastens (BAL1) mitteilt (E23).

9. Migrationsverfahren nach einem der Ansprüche 7 und 8, **dadurch gekennzeichnet, daß** vor der Bearbeitung der Migrationsanfragen zwischen einem Betriebsmodus mit den Überprüfungen (E20, E21, E22, E23) für das Ausführen des dritten Schritts (E4) und einem Betriebsmodus ohne die Überprüfungen (E20, E21, E22, E23) für das Ausführen des dritten Schritts (E4) gewählt wird.

10. Migrationsverfahren nach einem der vorhergehenden Ansprüche, **dadurch gekennzeichnet, daß** das zweite Nachrichtenübermittlungssystem (S2) mit wenigstens einem Datenmigrationsserver (SMD) verbunden ist, und nach dem fünften Schritt (E9), der für den ersten Briefkasten (BAL1) ausgeführt wird, ein Schritt (E15, E17) zum Übertragen von Daten ausgeführt wird, in dessen Verlauf der Datenmigrationsserver (SMD) das Übertragen von Daten, die in dem ersten Briefkasten (BAL1) des ersten Nachrichtenübermittlungssystems (S1) enthalten sind, zum zweiten Briefkasten (BAL2) des zweiten Nachrichtenübermittlungssystems (S2) auslöst (E15, E17).

11. Migrationsverfahren nach Anspruch 10, **dadurch gekennzeichnet, daß** der Migrationssteuerungsserver (SPM) in seiner Datenbank (BDM) einen Identifikator für die Migration von Adressen registriert, die für den ersten Briefkasten (BAL1) erfolgt ist, für den der fünfte Schritt (E9) ausgeführt worden ist, wobei der Schritt (E15, E17) zum Übertragen von Daten durch den Datenmigrationsserver (SMD) für den ersten Briefkasten (BAL1) ausgeführt worden ist, der einem Identifikator für die Migration von Adressen zugewiesen ist, die in der Datenbank (BDM) des Migrationssteuerungsservers (SPM) ausgeführt worden ist.

12. Migrationsverfahren nach Anspruch 10 oder 11, **dadurch gekennzeichnet, daß** in dem Fall, in dem der fünfte Schritt (E9) nicht für den ersten Briefkasten (BAL1) ausgeführt wurde, und - falls dieser Briefkasten über einen solchen verfügt - der Datenmigrationsserver (SMD) das Übertragen (E17) der Verzeichnisdaten dieses ersten Briefkastens (BAL1) des ersten Nachrichtenübermittlungssystems (S1) zum zweiten Briefkasten (BAL2) des zweiten Nachrichtenübermittlungssystems (S2) auslöst.

13. Migrationsverfahren nach einem der Ansprüche 10 bis 12, **dadurch gekennzeichnet, daß** nach dem Schritt (E15, E17) zum Übertragen von Daten der Datenmigrationsserver (SMD) den Migrationssteuerungsserver (SPM) abfragt (E18), um herauszufinden, ob es einen weiteren Briefkasten gibt, für den der fünfte Schritt (E9) ausgeführt worden ist, und - falls dies zutrifft - führt der Datenmigrationsserver (SMD) den Schritt (E15, E17) zum Übertragen von Daten für den Briefkasten aus, der ihm von dem Migrationssteuerungsserver (SPM) angezeigt wird und für den der fünfte Schritt (E9) ausgeführt worden ist.

14. Migrationsverfahren nach einem der Ansprüche 10 bis 13, **dadurch gekennzeichnet, daß** vor dem Bearbeiten der Migrationsanfragen zwischen einem Betriebsmodus mit dem Schritt (E15, E17) zum Übertragen von Daten und einem Betriebsmodus ohne Schritt (E15, E17) zum Übertragen von Daten gewählt wird.

15. Migrationsverfahren nach einem der vorhergehenden Ansprüche, **dadurch gekennzeichnet, daß** das zweite Nachrichtenübermittlungssystem (S2) mit wenigstens einem Datenmigrationsserver (SMD) verbunden ist und - nach dem fünften Schritt (E4), der für den ersten Briefkasten (BAL1) ausgeführt wurde - ein Schritt (E30) zum Übertragen von lokalen Daten des Benutzerplatzes (P1) ausgeführt wird, in dessen Verlauf der Benutzerplatz (P1) des ersten Briefkastens (BAL1) des ersten Nachrichtenübermittlungssystems (S1) das Übertragen von Daten, die in dem Benuterzplatz (P1) vorhanden sind, zum zweiten Briefkasten (BAL2) des zweiten Nachrichtenübermittlungssystems (S2) auslöst.

16. Migrationsverfahren nach Anspruch 15, **dadurch gekennzeichnet, daß** für den Benutzerplatz (P1), für den der Schritt (E30) zum Übertragen von lokalen Daten ausgeführt wurde, dessen Parametrierung gemäß Voreinstellung in eine vorgeschriebene Parametrierung umgewandelt wird, die mit dem zweiten Nachrichtenübermittlungssystem (S2) kompatibel ist.

17. Migrationsverfahren nach einem der Ansprüche 15 und 16, **dadurch gekennzeichnet, daß** vor der Bearbeitung der Migrationsanfragen zwischen einem Betriebsmodus mit Schritt (E30) zum Übertragen von lokalen Daten von Benutzerplätzen und einem Betriebsmodus ohne Schritt (E30) zum Übertragen von Daten von Benutzerplätzen gewählt wird.

18. Migrationsverfahren nach einem der vorhergehenden Ansprüche, **dadurch gekennzeichnet, daß** für das Registrieren der Migrationsanfrage (DDM) während des ersten Schritts (E1) die Migrationsanfrage auf einem Verwaltungsplatz (PA) erfaßt wird, der mit dem Migrationssteuerungsserver (SPM) verbunden ist, die erfaßte Migrationsanfrage (DDM) des Verwaltungsplatzes (PA) an den Migrationssteuerungsserver (SPM) gesendet und die Migrationsanfrage (DDM) in einer Datenbank (TC) des Migrationssteuerungsservers (SPM) registriert wird.

19. Migrationsverfahren nach einem der vorhergehenden Ansprüche, **dadurch gekennzeichnet, daß** das erste elektronische Nachrichtenübermittlungssystem (S1) wenigstens einen vierten Briefkasten (BAL4) zur elektronischen Nachrichtenübermittlung umfaßt und mit wenigstens einem vierten Benutzerplatz (P4) des vierten Briefkastens (BAL4) verbunden ist, und ferner während des fünften Schritts (E9) in dem ersten elektronischen Nachrichtenübermittlungssystem (S1) eine Umleitung des ersten Briefkastens (BAL1) zum zweiten Briefkasten (BAL2) hin erfolgt, so daß alle Nachrichten, die in dem ersten Briefkasten (BAL1) ankommen, zum zweiten Briefkasten (BAL2) hin umgeleitet werden.

20. Migrationsverfahren nach einem der vorhergehenden Ansprüche, **dadurch gekennzeichnet, daß** aus dem ersten Nachrichtenübermittlungssystem (S1) der erste Briefkasten (BAL1) beseitigt (E41) wird, für den wenigstens der fünfte Schritt (E9) ausgeführt worden ist.

21. Vorrichtung zum Umsetzen des Migrationsverfahrens nach einem der vorhergehenden Ansprüche, **dadurch gekennzeichnet, daß** die Vorrichtung Folgendes umfaßt:
- ein Nachrichten-Routingzentrum (FED), das dazu bestimmt ist, mit dem ersten und dem zweiten Nachrichtenübermittlungssystem (S1, S2) verbunden zu werden und eine Teilnehmerdatenbank (ANN) der Adressen umfaßt, die den Briefkästen des ersten und des zweiten Nachrichtenübermittlungssystems (S1, S2) zugewiesen sind,
- einen Migrationssteuerungsserver (SPM), der mit dem Nachrichten-Routingzentrum (FED) verbunden und geeignet ist, wenigstens eine Migrationsanfrage (DDM) zu registrieren, welche in Verbindung wenigstens die erste Zugangsadresse (AD1) eines ersten Briefkastens (BAL1) des ersten Nachrichtenübermittlungssystems (S1) und einen Zeitpunkt (DM) umfaßt, der für die Migration des ersten Briefkastens (BAL1) vorgesehen ist, wobei der Migrationssteuerungsserver (SPM) Mittel umfaßt, um die Bearbeitung jeder registrierten Migrationsanfrage (DDM) gemäß der Schritte zwei bis fünf zu steuern,
- einen Datenmigrationsserver (SMD), der dazu bestimmt ist, mit den Nachrichtenübermittlungssystemen (S1, S2, S3) verbunden zu sein, wobei der Migrationssteuerungsserver (SPM) mit dem Datenmigrationsserver verbunden ist und Steuerungsmittel des letzteren umfaßt, die geeignet sind, ihn dazu zu bringen, einen Schritt zum Übertragen von Daten des ersten Briefkastens (BAL1) zum zweiten Briefkasten (BAL2) für die Migrationsanfrage (DDM) durchzuführen, die gemäß des fünften Schritts (E9) bearbeitet wird.
